# EUROPÄISCHE PATENTANMELDUNG

(11) **EP 2 299 254 A2**
(43) Veröffentlichungstag der Anmeldung: **23.03.2011**
(21) Anmeldenummer: 10008884.8
(22) Anmeldetag: 26.08.2010
(51) Int. Cl.: G01N 1/12, G01N 1/16

(54) **Vorrichtung zum Anbau an ein kabelgebundenes Unterwassergerät**

(30) Priorität: 28.08.2009 DE 102009039192
(71) Anmelder: Optimare Sensorsysteme GmbH & Co. KG, 27572 Bremerhaven (DE)
(72) Erfinder: Sander, Hendrik, 27404 Elsdorf-Bockhorst (DE)
(74) Vertreter: Jabbusch, Matthias

(57) **Zusammenfassung**

Bei einer Vorrichtung, die zum Anbau an ein kabelgebundenes Unterwassergerät, insbesondere an einen Kranzwasserschöpfer, vorgesehen ist und wenigstens eine Messwertaufnahme hat, ist mit dieser Messwertaufnahme wenigstens eine Lagebestimmungseinrichtung sowie wenigstens eine Bewegungsbestimmungseinrichtung ausgebildet. Dabei weist die Lagebestimmungseinrichtung wenigstens einen Magnetfelddetektor, wenigstens ein Barometer sowie wenigstens einen Neigungsdetektor auf. Die Bewegungsbestimmungseinrichtung weist hingegen wenigstens einen Beschleunigungsdetektor sowie wenigstens ein Zeitmessglied auf.

## Beschreibung

Die Erfindung betrifft eine Vorrichtung zum Anbau an ein kabelgebundenes Unterwassergerät, insbesondere an einen Kranzwasserschöpfer, mit wenigstens einer Messwertaufnahme. Weiterhin betrifft die Erfindung einen Kranzwasserschöpfer mit wenigstens einer Messwertaufnahme und genau einem Anschlagmittel für ein lastaufnehmendes Kabel.

Um den Verlust der überaus werthaltigen Unterwassergeräte zu vermeiden, ist es bekannt, das Kabel um ein beschädigtes Ende einzukürzen. Nachfolgend wird das kabelgebundene Unterwassergerät wieder mit dem eingekürzten Kabel verbunden. Diese Verbindung wird als Terminierung bezeichnet. Zur Terminierung gehört die Herstellung lastaufnehmender Anschlüsse, welche regelmäßig die äußeren Litzenschichten des Kabels ausbilden und die Herstellung informations- und energieführender Anschlüsse, welche regelmäßig im Inneren des Kabels verlaufen. So genannte torsionsfreie Kabel weisen gegenläufig spiralförmig gewickelte Litzenschichten auf, so dass sich bei Zugbelastung von den Litzenschichten induzierte Drehmomente gegeneinander aufheben. Wird ein Kabel terminiert, kommt es regelmäßig zu Spannungsdifferenzen zwischen den einzelnen Litzenschichten. Wird das Kabel dann zum ersten Mal belastet, tragen die Litzenschichten nunmehr unterschiedlich zur Lastaufnahme des Kabels bei, so dass die Tragfähigkeit des Kabels insgesamt vermindert ist und zusätzlich schädliche Drehmomente auftreten können. Um Spannungsdifferenzen zwischen den einzelnen Litzenschichten abzubauen, ist es bekannt, das Kabel vor seinem bestimmungsgemäßen Gebrauch mit einer Solllast auszuhängen. Das Aushängen erfolgt dabei auf der Basis von Erfahrungswerten, da in der Tiefe des Meeres nicht feststellbar ist, ob, wie schnell und wie lange die Solllast am Kabel dreht. Ein weiteres Problem besteht darin, dass das Kabel beim Hieven anders belastet wird als beim Fieren des Unterwassergerätes. Beim Fieren vermindert der Strömungswiderstand die vom Kabel aufzunehmende Last, und beim Hieven vergrößert der Strömungswiderstand die vom Kabel aufzunehmende Last. Kabel mit spiralförmig gewickelter Oberflächenstruktur haben ferner die Eigenschaft, dass durch Reibung in der Windenmechanik ebenfalls schädliche Drehmomente erzeugt werden. Außerdem kann sich durch das Anströmen eines asymmetrisch konstruierten Unterwassergerätes ähnlich eines Propellers ein Drehmoment ergeben, welches das Unterwassergerät in Drehung versetzt und das Kabel verdreht. Insbesondere beim Hieven können derartige Verdrehungen zu ernsthaften Beschädigungen des Kabels auf der Windentrommel führen. Außerdem besteht bei einer Verdrehung des Kabels stets die Gefahr, dass eine durch Seegang vom Schiff ausgeführte Senkgeschwindigkeit größer ist als die von der Seilwinde induzierte Hievgeschwindigkeit, so dass das Kabel zeitweise in einen lastfreien Zustand gerät und sich Schlaufen bilden können. Diese Gefahr besteht vor allem kurz vor dem an Bord holen des Unterwassergerätes. Bei Einsetzen einer erneuten Lastaufnahme wird das Kabel dann im Schlaufenbereich ernsthaft beschädigt. Ein Teil der Litzenschichten wird dabei irreversibel gestreckt ein anderer ebenso irreversibel überdreht, so dass der betreffende Kabelabschnitt entfernt und das Kabel neu terminiert werden muss. Bei bekannten Vorrichtungen weist die Messwertaufnahme beispielsweise zur Temperatur- und Tiefenmessung geeignete Messwertaufnahmen auf, die jedoch nicht dazu geeignet sind, Schädigungen des Kabels zu vermeiden.

Der Erfindung liegt daher die Aufgabe zugrunde, eine Vorrichtung der eingangsgenannten Gattung aufzuzeigen, mit deren Messwertaufnahme Schädigungen des Kabels nachhaltig vermieden sind.

Diese Aufgabe ist erfindungsgemäß durch eine Vorrichtung mit den Merkmalen des Patentanspruches 1 sowie durch einen Kranzwasserschöpfer mit den Merkmalen des Patentanspruches 15 gelöst. Vorteilhafte Weiterbildungen der Erfindung sind in den auf den Patentanspruch 1 rückbezogenen Unteransprüchen 2 bis 14 angegeben.

Die erfindungsgemäße Vorrichtung zum Anbau an ein kabelgebundenes Unterwassergerät zeichnet sich dadurch aus, dass mit der Messwertaufnahme wenigstens eine Lagebestimmungseinrichtung ausgebildet ist, und dass mit der Messwertaufnahme wenigstens eine Bewegungsbestimmungseinrichtung ausgebildet ist. Die Lagebestimmungseinrichtung dient einerseits der Bestimmung des Ortes des Unterwassergerätes in Bezug auf einen Fixpunkt, beispielsweise in Bezug auf ein das kabelgebundene Unterwassergerät zu Wasser lassendes Forschungsschiff, und andererseits der Bestimmung der Ausrichtung des Unterwassergerätes in Bezug auf seine eigenen geometrischen Abmessungen, beispielsweise in Bezug auf eine am Unterwassergerät definierte Hauptachse oder Hauptebene. Die Bewegungsbestimmungseinrichtung dient hingegen der Bestimmung translatorischer Bewegungen in Bezug auf die Bewegungsbahn des Unterwassergerätes sowie der Bestimmung rotatorischer Bewegungen in Bezug auf einen zentralen Punkt des Unterwassergerätes. Gemeinsam sind Lagebestimmungseinrichtung und Bewegungsbestimmungseinrichtung dazu geeignet, komplexe Bewegungsabläufe zu erfassen. Auf diese Weise können Schädigungen des Kabels hervorrufende Betriebssituationen kontrolliert vermieden werden. Mit der verbesserten Kenntnis über das Lage- und Bewegungsverhalten des Unterwassergerätes können andere von der Messwertaufnahme aufgenommene Messwerte als fehlerhaft erkannt und gegebenenfalls korrigiert oder verworfen werden.

Nach einer ersten Weiterbildung der Erfindung weist die Lagebestimmungseinrichtung wenigstens einen Magnetfelddetektor auf. Dieser weist vorzugsweise in drei Raumrichtungen wirkende Sensoren auf, mit denen die Neigung und Richtung relativ zum Magnetfeld der Erde ermittelbar ist.

Nach einer nächsten Weiterbildung der Erfindung weist die Lagebestimmungseinrichtung wenigstens ein Barometer auf. Das Barometer dient insbesondere der Bestimmung der vertikalen Position des Unterwassergerätes, vorzugsweise in Bezug auf den mittleren Meeresspiegel.

Um unerwünschte Schräglagen des Unterwassergerätes zu detektieren, weist die Lagebestimmungseinrichtung wenigstens einen Neigungsdetektor auf. Dieser dient vorzugsweise der Bestimmung einer Winkelabweichung zwischen einer am Unterwassergerät definierten Hauptebene und einer geräteunabhängigen Bezugsebene, beispielsweise einer Horizontalebene.

Nach einer anderen Weiterbildung der Erfindung weist die Bewegungsbestimmungseinrichtung wenigstens einen Beschleunigungsdetektor auf. Der Beschleunigungsdetektor misst die auf eine definierte Testmasse wirkende Trägheitskraft, dessen Wert sich proportional zur Beschleunigung verhält. Vorzugsweise weist die Bewegungsbestimmungseinrichtung jedoch drei Beschleunigungsdetektoren auf, die jeweils in einem Winkel von 90° zueinander angeordnet sind. Auf diese Weise können mit dem Beschleunigungsdetektor in beliebigen Richtungen wirkende Linearbeschleunigungen gemessen werden.

In Kenntnis der von dem Beschleunigungsdetektor gelieferten Beschleunigungswerte sowie der anfänglich von der Seilwinde induzierten Fiergeschwindigkeit können durch einfache Integration die linearen Geschwindigkeiten und durch zweifache Integration der Beschleunigungswerte die in allen drei Raumrichtungen zurückgelegten Wegstrecken bestimmt werden. Für die Integration der Beschleunigungswerte weist die Bewegungsbestimmungseinrichtung wenigstens ein Zeitmessglied auf.

Zur Übertragung der von der Lagebestimmungseinrichtung und der Bewegungsbestimmungseinrichtung gelieferten Daten an die Wasseroberfläche, insbesondere an ein dort befindliches Forschungsschiff weist die Messwertaufnahme wenigstens einen Funksignalgeber auf. Mit dem Funksignalgeber kann vorteilhaft auf korrosionsgefährdete galvanische Verbindungen zwischen der erfindungsgemäßen Vorrichtung und dem kabelgebundenen Unterwassergerät verzichtet werden.

Nach einer nächsten Weiterbildung der Erfindung weist die Messwertaufnahme wenigstens einen Strömungsmesser auf. Dieser kann je nach Ausrichtung und Anordnung sowohl zur Messung der Meeresströmungen als auch zur Messung der Hief-, Fier- oder Winkelgeschwindigkeiten eingesetzt werden. Der Strömungsmesser kann sowohl Bestandteil der Lagebestimmungseinrichtung als auch Bestandteil der Bewegungsbestimmungseinrichtung sein.

Nach einer anderen Weiterbildung der Erfindung weist die Messwertaufnahme einen akustischen Entfernungsmesser auf. Dieser kann insbesondere unter Anwendung des Dopplereffektes Bestandteil der Bewegungsbestimmungseinrichtung sein. Grundsätzlich ist es jedoch ebenso denkbar, den Entfernungsmesser zur Bestimmung des Ortes des Unterwassergerätes einzusetzen.

Nach einer besonders vorteilhaften Weiterbildung der Erfindung ist die Messwertaufnahme an eine Datenverarbeitungseinrichtung angeschlossen, wobei die Messwerteinrichtung und die Datenverarbeitungseinrichtung gemeinsam in einem Gehäuse verkapselt sind. Vorzugsweise weist die Datenverarbeitungseinrichtung einen Datenspeicher auf, mit welchem aus den Messwerten erzeugte Daten besonders zuverlässig gegen unbeabsichtigte Datenverluste zwischengespeichert und gesichert werden können. Eine hochdruckfeste Ausbildung des Gehäuses macht die erfindungsgemäße Vorrichtung auch für Tiefwassereinsätze außerhalb von Schelfbereichen geeignet. Besonders bevorzugt ist vorgesehen, die einzelnen Komponenten der Messwertaufnahme mittels einer Vergussmasse zu einem Modul fest miteinander zu vergießen. Bei einem derart ausgebildeten Modul übernimmt die Vergussmasse die Funktion des Gehäuses.

Alternativ zu der Ausbildung eines hochdruckfesten Gehäuses wird vorgeschlagen, das Gehäuse mit einem Öl zu befüllen. Aufgrund der inkompressiblen Eigenschaften von Öl stellt sich im Inneren des Gehäuse der an der Gehäuseaußenseite anliegende Außendruck ein, so dass die vom Gehäuse aufzunehmenden Spannungen minimal klein sind.

Weiterhin ist vorgesehen, dass die Messwertaufnahme wenigstens einen im Gehäuse verkapselten Energiespeicher aufweist. Mit dem verkapselten Energiespeicher kann vorteilhaft auf korrosionsgefährdete galvanische Verbindungen zwischen der erfindungsgemäßen Vorrichtung und dem Unterwassergerät verzichtet werden. Als Energiespeicher werden beispielsweise Batterien oder Akkumulatoren eingesetzt.

Um den Wartungsaufwand für die erfindungsgemäße Vorrichtung so gering wie möglich zu halten, weist der Energiespeicher wenigstens einen im Gehäuse verkapselten Ladeanschluss auf. Auf diese Weise kann der Energiespeicher mit Energie nachgeladen werden, ohne das Gehäuse hierfür öffnen oder galvanische Leitungen durch die Gehäusewandungen hindurchführen zu müssen. Das Nachladen des Energiespeichers erfolgt beispielsweise induktiv über den Aufbau elektrischer Magnetfelder.

Zur Befestigung der erfindungsgemäßen Vorrichtung an ein kabelgebundenes Unterwassergerät weist das Gehäuse mit dem Unterwassergerät, insbesondere mit dem Gestell eines Kranzwasserschöpfers, zusammenwirkende Befestigungsstrukturen auf. Diese weisen vorzugsweise Verstellmöglichkeiten auf, mit denen die Befestigungsstrukturen an die Gestelle verschiedener handelsverfügbarer Kranzwasserschöpfer angepasst werden können. Um die erfindungsgemäße Vorrichtung im Wechsel an mehreren Kranzwasserschöpfern einsetzen zu können, sind mit den Befestigungsstrukturen mit Vorteil lösbare Verbindungen, insbesondere nach Art von Schnellverschlüssen fungierende Verbindungen ausgebildet.

Der erfindungsgemäße Kranzwasserschöpfer zeichnet sich in analoger Weise zur erfindungsgemäßen Vorrichtung ebenfalls dadurch aus, dass mit seiner Messwertaufnahme wenigstens eine Lagebestimmungseinrichtung sowie wenigstens eine Bewegungsbestimmungseinrichtung ausgebildet ist. Dabei besteht zum einen die Möglichkeit, die Lage- und Bewegungsbestimmungseinrichtung in einer Baueinheit zusammenzufassen und diese Baueinheit in lösbarer oder unlösbarer Weise am Gestell des Kranzwasserschöpfers anzuordnen. Zum anderen besteht jedoch auch die Möglichkeit, Lage- und Bewegungsbestimmungseinrichtung konstruktiv in die vorhandenen Strukturen handelsverfügbarer Kranzwasserschöpfer zu integrieren.

Ein Ausführungsbeispiel der Erfindung, aus dem sich weitere erfinderische Merkmale ergeben, ist in der Zeichnung dargestellt. Es zeigen:
- Fig. 1:: ein kabelgebundenes Unterwassergerät in einem schematisch dargestellten Anwendungsbeispiel;
- Fig. 2:: eine perspektivische Ansicht der erfindungsgemäßen Vorrichtung für das kabelgebundene Unterwassergerät gemäß Fig. 1.

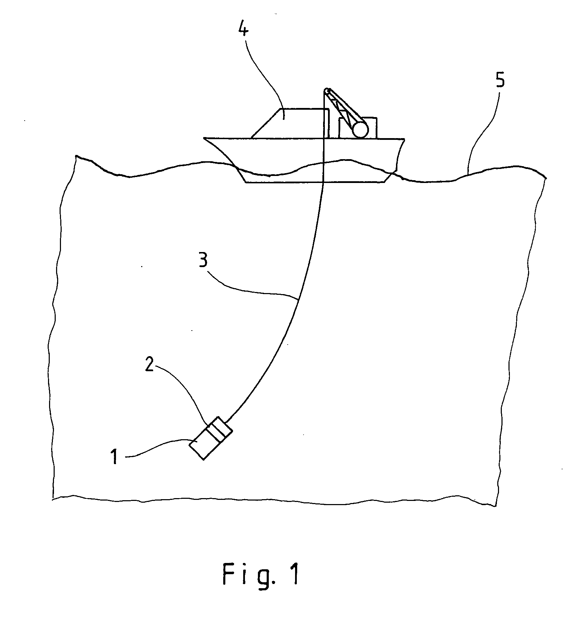

Die Fig. 1 zeigt ein als Kranzwasserschöpfer 1 ausgebildetes kabelgebundenes Unterwassergerät mit einer Messwertaufnahme 2. Der Kranzwasserschöpfer 1 ist über ein Kabel 3 mit einem Forschungsschiff 4 verbunden, das an einer Wasseroberfläche 5 positioniert ist. Über das aufgrund von Meeresströmungen gekrümmte Kabel 3 erfährt der Kranzwasserschöpfer 1 in Bezug auf das Forschungsschiff 4 eine Auslenkung in horizontaler Richtung sowie eine auf die Horizontalebene bezogene Neigung.

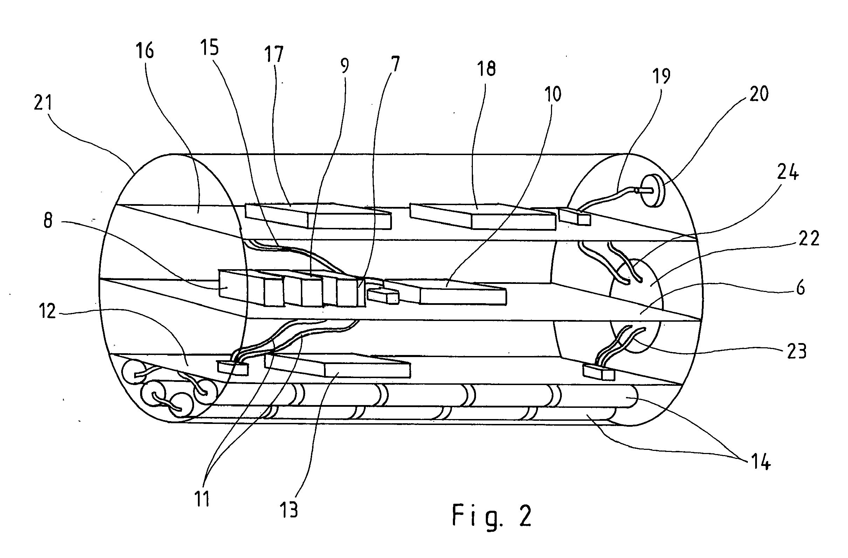

Die Fig. 2 zeigt eine perspektivische Ansicht der erfindungsgemäßen Vorrichtung für den Kranzwasserschöpfer gemäß Fig. 1. Die Vorrichtung weist eine Messwertaufnahme 6 mit einem Magnetfelddetektor 7, einem Neigungsdetektor 8, einem Beschleunigungsdetektor 9, sowie einer Datenverarbeitungseinrichtung 10 mit integriertem Datenspeicher auf. Die Messwertaufnahme 6 ist über Versorgungskabel 11 an eine Stromversorgung 12 angeschlossen. Die Stromversorgung 12 weist eine Stormversorgungsschaltung 13 sowie vier miteinander verschaltete Energiespeicher 14 auf. Außerdem ist die Messwertaufnahme 6 über Datenübertragungskabel 15 mit einer Kommunikationseinrichtung 16 verbunden. Die Kommunikationseinrichtung 16 weist einen Funksignalgeber 17 sowie einen Lichtsignalgeber 18 auf. Der Lichtsignalgeber 18 ist über eine Glasfaserleitung 19 an eine Anschlussbuchse 20 angeschlossen, die in einer Wandung eines die Messwertaufnahme 6, die Stromversorgung 12, sowie die Kommunikationseinrichtung 16 umgebenden Gehäuse 21 angeordnet ist. Außerdem weist das Gehäuse 21 einen Ladeanschluss 22 auf, der über ein Ladekabel 23 mit der Stromversorgung 12 und über ein Datenübertragungskabel 24 mit der Kommunikationseinrichtung 16 verbunden ist.

## Patentansprüche

1. Vorrichtung zum Anbau an ein kabelgebundenes Unterwassergerät, insbesondere an einen Kranzwasserschöpfer, mit wenigstens einer Messwertaufnahme,
**dadurch gekennzeichnet,**
**dass** mit der Messwertaufnahme (2) wenigstens eine Lagebestimmungseinrichtung ausgebildet ist, und
**dass** mit der Messwertaufnahme (2) wenigstens eine Bewegungsbestimmungseinrichtung ausgebildet ist.

2. Vorrichtung nach Anspruch 1, **dadurch gekennzeichnet, dass** die Lagebestimmungseinrichtung wenigstens einen Magnetfelddetektor (7) aufweist.

3. Vorrichtung nach Anspruch 1 oder 2, **dadurch gekennzeichnet, dass** die Lagebestimmungseinrichtung wenigstens ein Barometer aufweist.

4. Vorrichtung nach einem der Ansprüche 1 bis 3, **dadurch gekennzeichnet, dass** die Lagebestimmungseinrichtung wenigstens einen Neigungsdetektor (8) aufweist.

5. Vorrichtung nach einem der Ansprüche 1 bis 4, **dadurch gekennzeichnet, dass** die Bewegungsbestimmungseinrichtung wenigstens einen Beschleunigungsdetektor (9) aufweist.

6. Vorrichtung nach einem der Ansprüche 1 bis 5, **dadurch gekennzeichnet, dass** die Bewegungsbestimmungseinrichtung wenigstens ein Zeitmessglied aufweist.

7. Vorrichtung nach einem der Ansprüche 1 bis 6, **dadurch gekennzeichnet, dass** die Messwertaufnahme wenigstens einen Funksignalgeber (17) aufweist.

8. Vorrichtung nach einem der Ansprüche 1 bis 7, **dadurch gekennzeichnet, dass** die Messwertaufnahme (6) wenigstens einen Strömungsmesser aufweist.

9. Vorrichtung nach einem der Ansprüche 1 bis 8, **dadurch gekennzeichnet, dass** die Messwertaufnahme (6) wenigstens einen akustischen Entfernungsmesser aufweist.

10. Vorrichtung nach einem der Ansprüche 1 bis 9, **dadurch gekennzeichnet, dass** die Messwertaufnahme (6) an eine Datenverarbeitungseinrichtung (10) angeschlossen ist, und dass die Messwerteinrichtung (6) und die Datenverarbeitungseinrichtung (10) gemeinsam in einem Gehäuse (21) verkapselt sind.

11. Vorrichtung nach Anspruch 10, **dadurch gekennzeichnet, dass** das Gehäuse (21) mit einem Öl befüllt ist.

12. Vorrichtung nach Anspruch 10 oder 11, **dadurch gekennzeichnet, dass** die Messwertaufnahme (6) wenigstens einen im Gehäuse (21) verkapselten Energiespeicher (14) aufweist.

13. Vorrichtung nach Anspruch 12, **dadurch gekennzeichnet, dass** der Energiespeicher (14) wenigstens einen im Gehäuse (21) verkapselten Ladeanschluss (22) aufweist.

14. Vorrichtung nach einem der Ansprüche 10 bis 13, **dadurch gekennzeichnet, dass** das Gehäuse mit dem Gestell eines Kranzwasserschöpfers zusammenwirkende Befestigungsstrukturen aufweist.

15. Kranzwasserschöpfer mit wenigstens einer Messwertaufnahme und genau einem Anschlagmittel für ein lastaufnehmendes Kabel, insbesondere zur Aufnahme einer Vorrichtung nach einem der Patentansprüche 1 bis 14, **dadurch gekennzeichnet,**
**dass** mit der Messwertaufnahme (2) wenigstens eine Lagebestimmungseinrichtung ausgebildet ist, und
**dass** mit der Messwertaufnahme (2) wenigstens eine Bewegungsbestimmungseinrichtung ausgebildet ist.
